(19) Europäisches Patentamt
European Patent Office
Office européen des brevets

(11) **EP 3 144 928 B1**

(12) **EUROPEAN PATENT SPECIFICATION**

(45) Date of publication and mention
of the grant of the patent:
**24.03.2021 Bulletin 2021/12**

(51) Int Cl.:
***G10K 11/178*** *(2006.01)*

(21) Application number: **15185236.5**

(22) Date of filing: **15.09.2015**

(54) **ACTIVE ROAD NOISE CONTROL**

AKTIVES STRASSENLÄRMDÄMPFUNGSSYSTEM

SYSTÈME DE SUPPRESSION DU BRUIT DE LA ROUTE ACTIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.03.2017 Bulletin 2017/12**

(73) Proprietor: **Harman Becker Automotive Systems
GmbH
76307 Karlsbad (DE)**

(72) Inventor: **Christoph, Markus
94315 Straubing (DE)**

(74) Representative: **Westphal, Mussgnug
Patentanwälte & Partner mbB
Werinherstraße 79
81541 München (DE)**

(56) References cited:
**EP-A1- 0 762 146     EP-A2- 0 721 178
EP-A2- 2 293 116     DE-A1- 3 644 858
GB-A- 2 455 410     JP-A- 2007 219 262**

**Description**

FIELD

The disclosure relates to active road noise control systems and active road noise control methods.

BACKGROUND

Land based vehicles, when driven on roads and other surfaces, generate low frequency noise known as road noise. Even in modern vehicles, cabin occupants may be exposed to road noise that is transmitted through the structure, e.g. tires-suspension-body-cabin path, and through airborne paths, e.g. tires-body-cabin path, to the cabin. It is desirable to reduce the road noise experienced by cabin occupants. Active Noise, vibration, and harshness (NVH) control technologies, also known as active road noise control (RNC) systems, can be used to reduce these noise components without modifying the vehicle's structure as in active vibration technologies. However, active sound technologies for road noise cancellation may require very specific noise and vibration (N&V) sensor arrangements throughout the vehicle structure in order to observe road noise related noise and vibration signals. DE3644858A1 discloses a system that has several arrays of spaced-apart vibration-sensitive sensors and a summing amplifier which receives the sensor output signals and forms the output signals which represent the average vibration signals from each array. EP2293116A2 discloses a method for marine seismic surveying with a plurality of spaced apart sensor groups, each including a plurality of longitudinally spaced apart pressure sensors and particle motion responsive sensors. Components of the sampled motion signals in each group above a selected frequency are combined to generate respective group motion signals. EP0762146A1 proposes a multi-sensor seismic unit including a multi-component geophone. Considering that a seismic signal arrives almost simultaneously at all geophones and that the non-seismic noise does not, the summation of the signals of geophones improves the signal-to-noise ratio by suppressing at least the statistical events of the non-seismic noise. GB2455410A discloses a system for attenuating noise in seismic signals detected in a marine seismic streamer that includes seismic detectors interconnected to form a plurality of wavenumber filters, with each of the wavenumber filters attenuating signals within a range of wavenumbers. The output signals from the wavenumber filters are connected to a plurality of band-pass filters and the output signals of the band-pass filters are combined by summation. EP0721178A2 discloses a multi-channel communication system with various combinations of input arrays including a summed array of inputs. The inputs can be provided from a variety of microphones, accelerometers, transformer sensors, duct sensors, optical sensors, and other types of transducers. The sensor or transducer outputs can be summed in a summed array JP2007219262 discloses an active road noise control system with adaptive filters.

SUMMARY

An exemplary road noise control system according to the invention includes a noise and vibration sensing system, at least one loudspeaker, and a road noise control module for creating cancelling signals for cancelling noise from a plurality of noise and vibration sources. The road noise control module is connected to the noise and vibration sensing system and to the at least one loudspeaker. The noise and vibration sensing system includes an acceleration sensor arrangement including at least one acceleration sensor and is configured to generate at least two sense signals representative of the acceleration that acts on the acceleration sensor arrangement, wherein the sense signals have dynamic ranges which are the ratios between maximum amplitudes of the sense signals and noise created by the acceleration sensor arrangement. The noise and vibration sensing system further includes a summer module configured to sum up the at least two sense signals to provide a sum signal, wherein the sum signal includes noise created by the acceleration sensor arrangement and wherein the sum signal has a dynamic range which is the ratio between a maximum amplitude of the sum signal and the noise included in the sum signal, the dynamic range of the sum signal being greater than the arithmetic mean of the dynamic ranges of the sense signals. The acceleration sensors have identical directions of maximum sensitivity.

An exemplary road noise control method according to the invention includes noise and vibration sensing, creating cancelling signals for cancelling noise from a plurality of noise and vibration sources based on the sensed noise and vibrations, and generating from the cancelling signals cancelling noise. Noise and vibration sensing includes generating, with an acceleration sensor arrangement, at least two sense signals representative of at least one of accelerations, motions and vibrations that act on the acceleration sensor arrangement, wherein the sense signals have dynamic ranges which are the ratios between maximum amplitudes of the sense signals and noise created by the acceleration sensor arrangement. The method further includes summing up the at least two sense signals to provide a sum signal, wherein the sum signal includes noise created by the acceleration sensor arrangement and wherein the sum signal has a dynamic range which is the ratio between a maximum amplitude of the sum signal and the noise included in the sum signal, the dynamic range of the sum signal being greater than the arithmetic mean of the dynamic ranges of the sense signals. The at least two sense signals are generated with acceleration sensors having identical directions of maximum sensitivity.

## BRIEF DESCRIPTION OF THE DRAWINGS

The disclosure may be better understood from reading the following description of non-limiting embodiments to the attached drawings, in which like elements are referred to with like reference numbers, wherein below:

Figure 1 is a schematic diagram illustrating an exemplary simple single-channel active road noise control system;

Figure 2 is a schematic diagram illustrating an exemplary simple multi-channel active road noise control system;

Figure 3 is a schematic diagram illustrating an exemplary sensor arrangement with multiple single-axis sensors;

Figure 4 is a schematic diagram illustrating an exemplary sensor arrangement with a multi-axis sensor;

Figure 5 is a schematic diagram illustrating an exemplary sensor arrangement with multiple sensors arranged in specific pattern;

Figure 6 is a diagram illustrating two exemplary sense signals, each of which having a harmonic component and a noise component;

Figure 7 is a block diagram illustrating an exemplary summing circuit; and

Figure 8 is a flow chart illustrating an exemplary noise and vibration sensing method.

## DETAILED DESCRIPTION

Noise and vibration sensors provide reference inputs to active RNC systems, e.g., multichannel feedforward active road noise control systems, as a basis for generating the anti-noise that reduces or cancels road noise. Noise and vibration sensors may include acceleration sensors such as accelerometers, force gauges, load cells, etc. For example, an accelerometer is a device that measures proper acceleration. Proper acceleration is not the same as coordinate acceleration, which is the rate of change of velocity. Single- and multi-axis models of accelerometers are available for detecting magnitude and direction of the proper acceleration, and can be used to sense orientation, coordinate acceleration, motion, vibration, and shock.

Airborne and structure-borne noise sources are monitored by the noise and vibration sensors in order to provide the highest possible road noise reduction (cancellation) performance between 0 Hz and 1 kHz. For example, acceleration sensors used as input noise and vibration sensors may be disposed across the vehicle to monitor the structural behavior of the suspension and other axle components for global RNC. Above a frequency range that stretches from 0 Hz to approximately 500 Hz, acoustic sensors that measure the airborne road noise may be used as reference control inputs. Furthermore, two microphones may be placed in the headrest in close proximity of the passenger's ears to provide an error signal or error signals in case of binaural reduction or cancellation. The feedforward filters are tuned or adapted to achieve maximum noise reduction or noise cancellation at both ears.

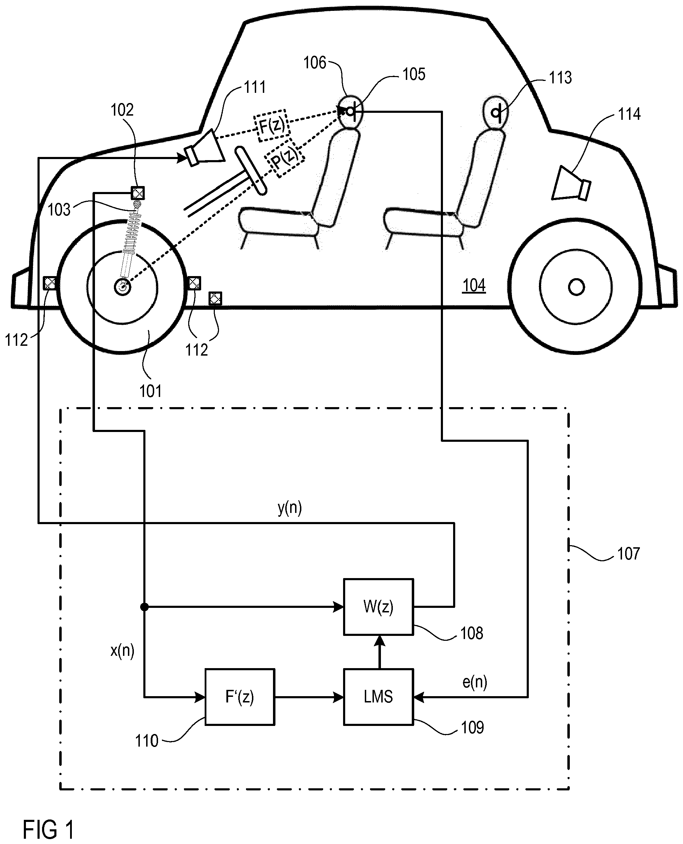

A simple single-channel feedforward active RNC system may be constructed as shown in Figure 1. Vibrations that originate from a wheel 101 moving on a road surface are detected by a suspension acceleration sensor 102 which is mechanically coupled with a suspension device 103 of an automotive vehicle 104 and which outputs a noise and vibration signal x(n) that represents the detected vibrations and, thus, correlates with the road noise audible within the cabin. At the same time, an error signal e(n) representing noise present in the cabin of the vehicle 104 is detected by a microphone 105 arranged within the cabin in a headrest 106 of a seat (e.g., the driver's seat) . The road noise originating from the wheel 101 is mechanically transferred to the microphone 105 according to a transfer characteristic P(z).

A transfer characteristic W(z) of a controllable filter 108 is controlled by an adaptive filter controller 109 which may operate according to the known least mean square (LMS) algorithm based on the error signal e(n) and on the road noise signal x(n) filtered with a transfer characteristic F'(z) by a filter 110, wherein W(z) = -P(z)/F(z). F'(z) = F(z) and F(z) represents the transfer function between a loudspeaker and the microphone 105. A signal y(n) having a waveform inverse in phase to that of the road noise audible within the cabin is generated by an adaptive filter formed by controllable filter 108 and filter controller 109, based on the thus identified transfer characteristic W(z) and the noise and vibration signal x(n). From signal y(n) a waveform inverse in phase to that of the road noise audible within the cabin is then generated by the loudspeaker 111, which may be arranged in the cabin, to thereby reduce the road noise within the cabin. The exemplary system described above employs a straightforward single-channel feedforward filtered-x LMS control structure 107 for the sake of simplicity, but other control structures, e.g., multi-channel structures with a multiplicity of additional channels, a multiplicity of additional noise sensors 112, a multiplicity of additional microphones 113, and a multiplicity of additional loudspeakers 114, may be applied as well.

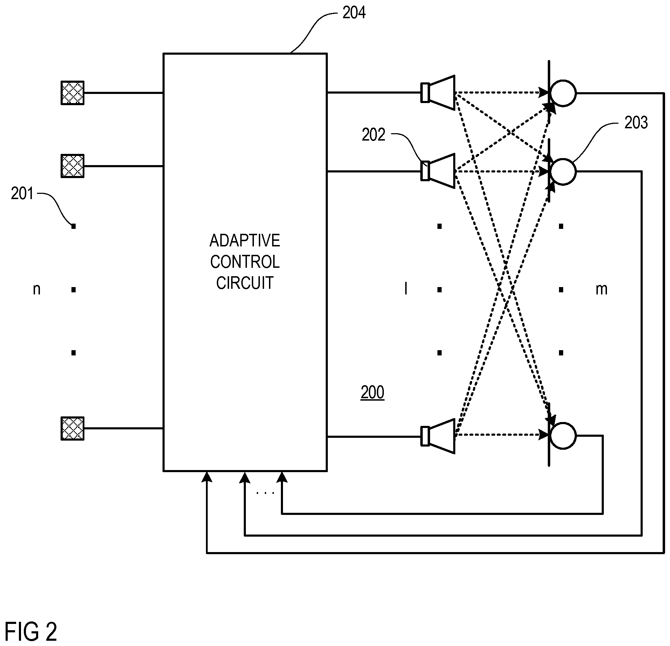

Figure 2 shows an active road noise control system 200 which is a multi-channel type active road noise control system capable of suppressing noise from a plurality of noise and vibration sources. The active road noise control system 200 comprises a multiplicity n of noise and vibration sensors 201, a multiplicity 1 of loudspeakers 202, a multiplicity m of microphones 203, and an adaptive control circuit 204 which operates to minimize the error between noise from the noise and vibration sources (primary noise) and cancelling noise (secondary noise). The adaptive control circuit 204 may include a number of control circuits provided for each of the loudspeakers 202, which create cancelling signals for cancelling noise from corresponding noise and vibration sources.

In conventional active RNC systems, the frequency range of noise to be reduced is limited to a low frequency range. That is, the conventional systems are not intended to reduce noise over its entire frequency range. Further, adaptive digital filters used in these systems have such characteristics as to be able to reduce only low frequency noise components, although processing noise over a wide frequency range is desired. In the active RNC systems disclosed herein, careful arrangement of the sensors allows for more sensitivity and a broader operating frequency range.

RNC systems as described above may exhibit a limited noise reduction capability when the acceleration sensors' dynamic ranges, i.e., the ratios between maximum amplitudes of signals output by the sensors and noise that originates from the sensors and that is contained in the signals output by the sensors (i.e., signal-to-noise ratio), are not sufficient, as is the case with conventional acceleration sensors used for suspension set-up and vibration control. However, it is rather costly to provide sensors with better dynamic ranges. In the following, simple ways are described that allow for using acceleration sensors with minor dynamic ranges in active road noise systems.

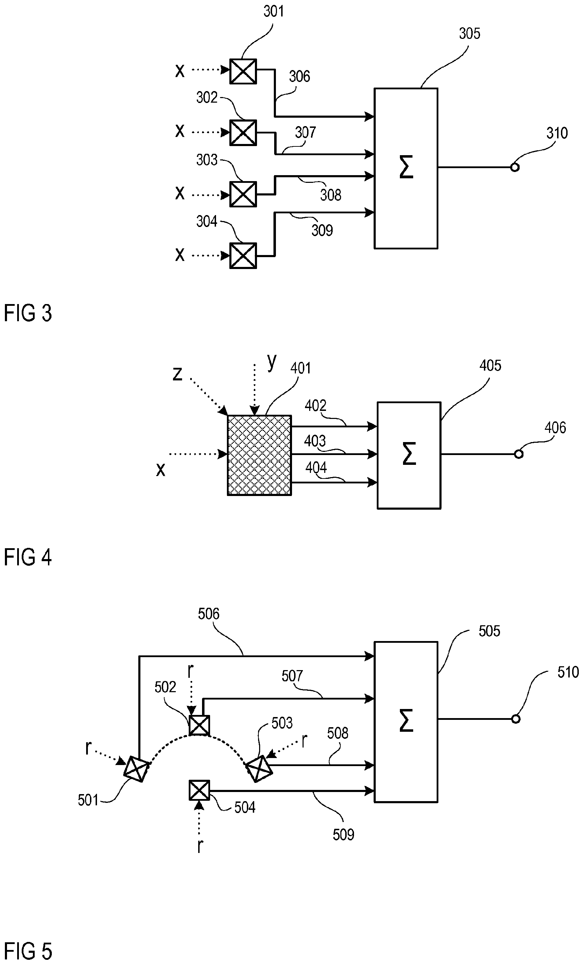

Referring to Figure 3, a multiplicity of (i.e., at least two) acceleration sensors, which is in the present example four (identical) acceleration sensors 301 - 304, are connected to a summer module 305 which sums up sense signals 306 - 309 provided by the acceleration sensors 301 - 304 and outputs a sum signal 310 representative of the sum of sense signals 306 - 309. The acceleration sensors 301 - 304 may be unidirectional sensors, i.e., sensors that have their maximum sensitivity only in one single direction such as a direction x of a given coordinate system x-y-z (referred to herein as pointing in this direction). In contrast, multi-directional sensors have their maximum sensitivities in at least two directions but not in all directions. For example, a two-directional sensor has two sensitivity maxima in two different (perpendicular) directions. Omni-directional sensors have approximately constant sensitivities independent of the direction. In the example shown in Figure 3, the acceleration sensors 301 - 304 may form a sensor arrangement in which all sensors are unidirectional and point in the same direction x or may, alternatively, point in different directions.

Figure 4 shows a three-directional acceleration sensor 401 with three sensitivity maxima in three different (perpendicular) directions x, y and z. The acceleration sensor 401 generates three sense signals 402 - 404 which are summed up by a summing module 405 to provide a sum signal 406. Instead of the three-directional acceleration sensor 401 three unidirectional sensors, each pointing in one of the three directions x, y and z, may be used.

Furthermore, an array with a multiplicity of (e.g., four) acceleration sensors 501-504, which are arranged in a specific pattern, e.g., evenly distributed over a virtual or real sphere's surface and pointing radial (r) outward from the sphere, may be employed as shown in Figure 5. A summing module 505 receives sense signals 506 - 509 from the acceleration sensors 501-504, sums them up and provides a sum signal 510 representative of the sum of the sense signals 506 - 509.

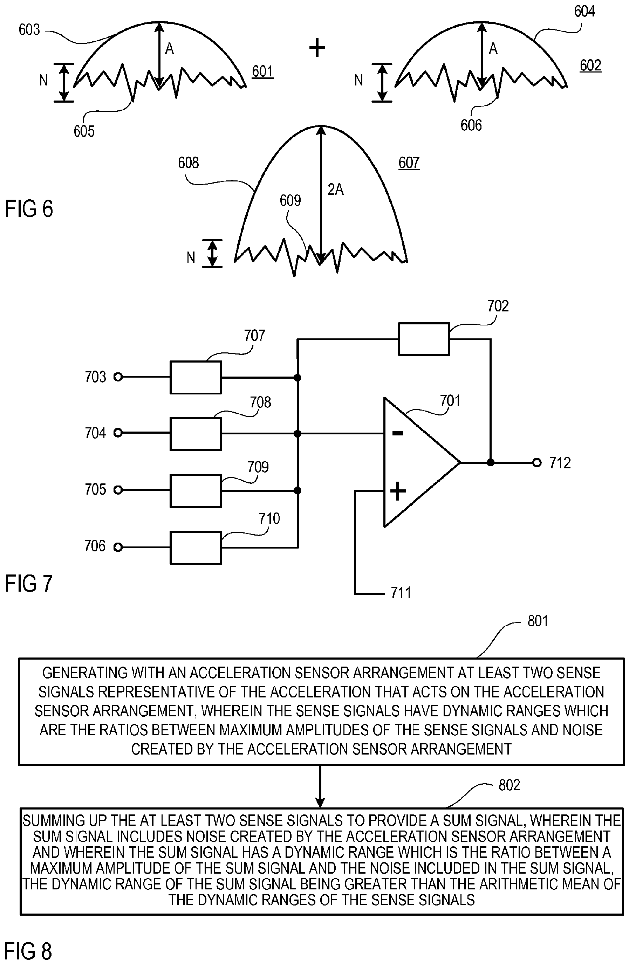

Figure 6 illustrates two exemplary sense signals 601 and 602, each of which have a harmonic component 603, 604 such as a (pure) sinus signal, and a noise component 605, 606. The harmonic components 603 and 604 may have a power A and the noise may have a power N. When summing up the sense signals 601 and 602, a sum signal 607 is obtained in which the harmonic components 603 and 604 add to a harmonic component 608 of sum signal 607 and noise components 605 and 606 are combined to provide a noise component 609 of sum signal 607. The power of the noise component 609 is almost the same as either noise component 605 or noise component 609 since the summation of random signals such as noise does not increase the power of the summed noise significantly due to the random amplitudes of the noise components. However, with harmonic signals such as sinus signals, the power of the sum of two identical sinus signals is twice the power that one signal has, so that when summing up mixed signals with harmonic and random components the dynamic range increases. In general, the increase I in dynamic range (or signal-to-noise ratio) can be described as: $I[dB] = 10\log_{10}N$, wherein N is the number of sensors combined.

The summing modules 305, 405 and 505 may include, in case of digital signal processing, simple digital hardware adders or signal processors that perform respective adding operations, or may include, in case of analog signal processing, analog summing circuits such as the example circuit shown in Figure 7. In the summing circuit shown in Figure 7, an operational amplifier 701 has an inverse input, a non-inverse input and an output. An ohmic resistor 702 is connected between output and inverse input of operational amplifier 701 to provide a feedback path. Sense signals 703 - 706 from four acceleration sensors (not shown) are supplied via ohmic resistors 707 - 710 to the inverse input of operational amplifier 701. The non-inverse input of operational amplifier 701 is connect to ground 711 and the output of operational amplifier 701 forms an output 712 of the analog summing module. Assuming that an output voltage $U_{out}$ is provided at output 712 and that the sense signals 703 - 706 provide identical input voltages, namely input voltage $U_{in}$, and further assuming that the resistors 707 - 710 have the same resistance $R_{in}$ and resistor 702 has a resistance Rout, the output voltage $U_{out}$ is as follows:

$$U_{out} = -\sum_1^N \frac{R_{out}}{R_{in}} U_{in}.$$

Referring to Figure 8, an exemplary noise and vibration sensing method may include (801) generating with an acceleration sensor arrangement at least two sense signals representative of the acceleration that acts on the acceleration sensor arrangement, wherein the sense signals have dynamic ranges which are the ratios between maximum amplitudes of the sense signals and noise created by the acceleration sensor arrangement, and (802) summing up the at least two sense signals to provide a sum signal, wherein the sum signal includes noise created by the acceleration sensor arrangement and wherein the sum signal has a dynamic range which is the ratio between a maximum amplitude of the sum signal and the noise included in the sum signal, the dynamic range of the sum signal being greater than the arithmetic mean of the dynamic ranges of the sense signals.

In RNC applications acceleration sensors are used as noise and vibration sensors, delivering the desired reference signals. If those signals exhibit a considerable noise floor, which is noise generated by the sensors themselves in contrast to noise and vibrations to be measured, and thus exhibit a small dynamic range, the whole RNC system is doomed to fail. However, acceleration sensors and acceleration sensor arrangements often output a multiplicity of sense signals. If sensor signals stem from multi-axis sensors or sensor arrangements mounted at almost the same local area and/or having the same orientation (x, y or z axis), these signals may be combined as described above to increase the system's dynamic. Thus, an underperforming RNC system may be enhanced by combining appropriate sense signals of a multiplicity of under-performing sensors. Furthermore, multiple cheap low-performing acceleration sensors may be used instead of a single expensive high-performing acceleration sensor to reduce overall costs, balancing out sensor costs and differences in their performance.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices. The described methods and associated actions may also be performed in various orders in addition to the order described in this application, in parallel, and/or simultaneously. The described systems are exemplary in nature and may include additional elements and/or omit elements.

As used in this application, an element or step recited in the singular and proceeded with the word "a" or "an" should be understood as not excluding plural of said elements or steps, unless such exclusion is stated. Furthermore, references to "one embodiment" or "one example" of the present disclosure are not intended to be interpreted as excluding the existence of additional embodiments that also incorporate the recited features.

The terms "first," "second," and "third," etc. are used merely as labels, and are not intended to impose numerical requirements or a particular positional order on their objects.

**Claims**

1. A road noise control system comprising a noise and vibration sensing system, at least one loudspeaker (111, 114, 202), and a road noise control module (107, 204) for creating cancelling signals for cancelling noise from a plurality of noise and vibration sources, the road noise control module (107, 204) connected to the noise and vibration sensing system and to the at least one loudspeaker (111, 114, 202), **characterized in that** the noise and vibration sensing system comprise:

   an acceleration sensor arrangement comprising at least two acceleration sensors (301-304, 401, 501-504) and configured to generate at least two sense signals (306-309, 402-404, 506-509) representative of the acceleration that acts on the acceleration sensor arrangement, wherein the sense signals (306-309, 402-404, 506-509) have dynamic ranges which are the ratios between maximum amplitudes of the sense signals (306-309, 402-404, 506-509) and noise created by the acceleration sensor arrangement; and
   a summer module (305, 405, 505) configured to sum up the at least two sense signals (306-309, 402-404, 506-509) to provide a sum signal (310, 406, 510), wherein the sum signal (310, 406, 510) includes noise created by the acceleration sensor arrangement, wherein the sum signal (310, 406, 510) has a dynamic range which is the ratio between a maximum amplitude of the sum signal (310, 406, 510) and the noise included in the sum signal (310, 406, 510), the dynamic range of the sum signal (310, 406, 510) being greater than the arithmetic mean of the dynamic ranges of the sense signals (306-309, 402-404, 506-509), and wherein the acceleration sensors (301-304, 401, 501-504) have identical directions of maximum sensitivity.

2. The system of claim 1, wherein the noise sensor arrangement comprises at least two unidirectional acceleration sensors (301-304), each of the at least two unidirectional acceleration sensors (301-304) configured to generate one sense signal (306-309, 402-404 506-509).

3. The system of claim 1 or 2, wherein the noise sensor arrangement comprises at least one multi-directional acceleration sensor (401), the at least one multi-directional acceleration sensor (401) configured to generate at least two sense signals (402-403).

4. The system of any of claims 1 - 3, wherein the noise sensor arrangement comprises an array of adjacent acceleration sensors (301-304, 501-504).

5. The system of any of claims 1 - 4, wherein the noise sensor arrangement comprises identical sensors (301-304, 501-504).

6. A road noise control method comprising noise and vibration sensing, creating cancelling signals for cancelling noise from a plurality of noise and vibration sources based on the sensed noise and vibrations, and generating from the cancelling signals cancelling noise, noise and vibration sensing being **characterized in that** it comprises:

   generating with an acceleration sensor arrangement at least two sense signals representative of at least one of accelerations, motions and vibrations that act on the acceleration sensor arrangement, wherein the sense signals have dynamic ranges which are the ratios between maximum amplitudes of the sense signals and noise created by the acceleration sensor arrangement; and
   summing up the at least two sense signals to provide a sum signal, wherein the sum signal includes noise created by the acceleration sensor arrangement and wherein the sum signal has a dynamic range which is the ratio between a maximum amplitude of the sum signal and the noise included in the sum signal, the dynamic range of the sum signal being greater than the arithmetic mean of the dynamic ranges of the sense signals (802), wherein the at least two sense signals are generated with acceleration sensors having identical directions of maximum sensitivity.

7. The method of claim 6, wherein the at least two sense signals include sense signals that are generated with at least two unidirectional acceleration sensors, each of the at least two unidirectional acceleration sensors configured to generate one sense signal.

8. The method of claim 6 or 7, wherein the at least two sense signals include sense signals that are generated with at least one multi-directional acceleration sensor, the at least one multi-directional acceleration sensor configured to generate at least two sense signals.

9. The method of any of claims 6 - 8, wherein the at least two sense signals are generated with an array of adjacent acceleration sensors.

10. The method of any of claims 6 - 9, wherein the at least two sense signals include sense signals that are generated with identical sensors.

**Patentansprüche**

1. Straßenlärmdämpfungssystem, das ein Lärm- und Schwingungserfassungssystem, mindestens einen Lautsprecher (111, 114, 202) und ein Straßenlärmdämpfungsmodul (107, 204) zum Erzeugen von Unterdrückungssignalen zum Unterdrücken eines Lärms aus einer Vielzahl von Lärm- und Schwingungsquellen umfasst, wobei das Straßenlärmdämpfungsmodul (107, 204) mit dem Lärm- und Schwingungserfassungssystem und mit dem mindestens einen Lautsprecher (111, 114, 202) verbunden ist, **dadurch gekennzeichnet, dass** das Lärm- und Schwingungserfassungssystem Folgendes umfasst:

   eine Beschleunigungssensoranordnung, die mindestens zwei Beschleunigungssensoren (301-304, 401, 501-504) umfasst und so konfiguriert ist, dass sie mindestens zwei Erfassungssignale (306-309, 402-404, 506-509) erzeugt, die die Beschleunigung darstellen, die auf die Beschleunigungssensoranordnung wirkt, wobei die Erfassungssignale (306-309, 402-404, 506-509) dynamische Bereiche aufweisen, die die Verhältnisse zwischen maximalen Amplituden der Erfassungssignale (306-309, 402-404, 506-509) und dem Lärm, der von der Beschleunigungssensoranordnung erzeugt wird, sind; und
   ein Summiermodul (305, 405, 505), das so konfiguriert ist, dass es die mindestens zwei Sensorsignale (306-309, 402-404, 506-509) summiert, um ein Summensignal (310, 406, 510) bereitzustellen, wobei das Summensignal (310, 406, 510) einen Lärm, der von der Beschleunigungssensoranordnung erzeugt wird, beinhaltet, wobei das Summensignal (310, 406, 510) einen dynamischen Bereich aufweist, der das Verhältnis zwischen einer maximalen Amplitude des Summensignals (310, 406, 510) und dem Lärm, der in dem Summensignal (310, 406, 510) beinhaltet ist, ist, wobei der dynamische Bereich des Summensignals (310, 406, 510) größer ist als das arithmetische Mittel der dynamischen Bereiche der Erfassungssignale (306-309, 402-404, 506-509) und wobei die Beschleunigungssensoren (301-304, 401, 501-504) identische Richtungen maximaler Sensitivität aufweisen.

2. System nach Anspruch 1, wobei die Lärmsensoranordnung mindestens zwei unidirektionale Beschleunigungssensoren (301-304) umfasst, wobei jeder der mindestens zwei unidirektionalen Beschleunigungssensoren (301-304) so konfiguriert ist, dass er ein Erfassungssignal (306-309, 402-404 506-509) erzeugt.

3. System nach Anspruch 1 oder 2, wobei die Lärmsensoranordnung mindestens einen multidirektionalen Beschleunigungssensor (401) umfasst, wobei der mindestens eine multidirektionale Beschleunigungssensor (401) so konfiguriert ist, dass er mindestens zwei Erfassungssignale (402-403) erzeugt.

4. System nach einem der Ansprüche 1 - 3, wobei die Lärmsensoranordnung eine Anordnung angrenzender Beschleunigungssensoren (301-304, 501-504) umfasst.

5. System nach einem der Ansprüche 1 - 4, wobei die Lärmsensoranordnung identische Sensoren (301-304, 501-504) umfasst.

6. Straßenlärmdämpfungsverfahren, umfassend das Erfassen von Lärm und Schwingungen, das Erzeugen von Unterdrückungssignalen zum Unterdrücken eines Lärms aus einer Vielzahl von Lärm- und Schwingungsquellen basierend auf dem erfassten Lärm und den erfassten Schwingungen, und das Erzeugen eines Unterdrückungslärms aus den Unterdrückungssignalen, wobei das Erfassen von Lärm und Schwingungen **dadurch gekennzeichnet ist, dass** es Folgendes umfasst:

Erzeugen von mindestens zwei Erfassungssignalen mit einer Beschleunigungssensoranordnung, die mindestens eines aus Beschleunigungen, Bewegungen und Schwingungen darstellen, die auf die Beschleunigungssensoranordnung wirken, wobei die Erfassungssignale dynamische Bereiche aufweisen, die die Verhältnisse zwischen maximalen Amplituden der Erfassungssignale und dem Lärm, der von der Beschleunigungssensoranordnung erzeugt wird, sind; und
Summieren der mindestens zwei Sensorsignale, um ein Summensignal bereitzustellen, wobei das Summensignal einen Lärm, der von der Beschleunigungssensoranordnung erzeugt wird, beinhaltet, und wobei das Summensignal einen dynamischen Bereich aufweist, der das Verhältnis zwischen einer maximalen Amplitude des Summensignals und dem Lärm, der in dem Summensignal beinhaltet ist, ist, wobei der dynamische Bereich des Summensignals größer ist als das arithmetische Mittel der dynamischen Bereiche der Erfassungssignale, wobei die mindestens zwei Erfassungssignale mit Beschleunigungssensoren erzeugt werden, die identische Richtungen maximaler Sensitivität aufweisen.

7. Verfahren nach Anspruch 6, wobei die mindestens zwei Erfassungssignale Erfassungssignale beinhalten, die mit mindestens zwei unidirektionalen Beschleunigungssensoren erzeugt werden, wobei jeder der mindestens zwei unidirektionalen Beschleunigungssensoren so konfiguriert ist, dass er ein Erfassungssignal erzeugt.

8. Verfahren nach Anspruch 6 oder 7, wobei die mindestens zwei Erfassungssignale Erfassungssignale beinhalten, die mit mindestens einem multidirektionalen Beschleunigungssensor erzeugt werden, wobei der mindestens eine multidirektionale Beschleunigungssensor so konfiguriert ist, dass er mindestens zwei Erfassungssignale erzeugt.

9. Verfahren nach einem der Ansprüche 6 - 8, wobei die mindestens zwei Erfassungssignale mit einer Anordnung von angrenzenden Beschleunigungssensoren erzeugt werden.

10. Verfahren nach einem der Ansprüche 6 - 9, wobei die mindestens zwei Erfassungssignale Erfassungssignale beinhalten, die mit identischen Sensoren erzeugt werden.

**Revendications**

1. Système de régulation de bruit de route comprenant un système de détection de bruit et de vibration, au moins un haut-parleur (111, 114, 202), un module de régulation de bruit de route (107, 204) pour créer des signaux d'élimination pour éliminer du bruit d'une pluralité de sources de bruit et de vibration, le module de régulation de bruit de route (107, 204) étant connecté au système de détection de bruit et de vibration et à l'au moins un haut-parleur (111, 114, 202), **caractérisé en ce que** le système de détection de bruit et de vibration comprennent :

un agencement de capteurs d'accélération comprenant au moins deux capteurs d'accélération (301 à 304, 401, 501 à 504) et conçu pour générer au moins deux signaux de détection (306 à 309, 402 à 404, 506 à 509) représentatifs de l'accélération qui agit sur l'agencement de capteurs d'accélération, dans lequel les signaux de détection (306 à 309, 402 à 404, 506 à 509) ont des plages dynamiques qui sont les rapports entre des amplitudes maximales des signaux de détection (306 à 309, 402 à 404, 506 à 509) et du bruit créé par l'agencement de capteurs d'accélération ; et
un module sommateur (305, 405, 505) conçu pour faire la somme des au moins deux signaux de détection (306 à 309, 402 à 404, 506 à 509) pour fournir un signal de somme (310, 406, 510), dans lequel le signal de somme (310, 406, 510) inclut du bruit créé par l'agencement de capteurs d'accélération, dans lequel le signal de somme (310, 406, 510) a une plage dynamique qui est le rapport entre une amplitude maximale du signal de somme (310, 406, 510) et le bruit inclus dans le signal de somme (310, 406, 510), la plage dynamique du signal de somme (310, 406, 510) étant supérieure à la moyenne arithmétique des plages dynamiques des signaux de détection (306 à 309, 402 à 404, 506 à 509), et dans lequel les capteurs d'accélération (301 à 304, 401, 501 à 504) ont des directions identiques d'une sensibilité maximale.

2. Système selon la revendication 1, dans lequel l'agencement de capteurs de bruit comprend au moins deux capteurs d'accélération unidirectionnels (301 à 304), chacun des au moins deux capteurs d'accélération unidirectionnels (301 à 304) étant conçu pour générer un signal de détection (306 à 309, 402 à 404, 506 à 509) .

3. Système selon la revendication 1 ou 2, dans lequel l'agencement de capteurs de bruit comprend au moins un capteur d'accélération multidirectionnel (401), l'au moins un capteur d'accélération multidirectionnel (401) étant conçu pour générer au moins deux signaux de détection (402 à 403).

4. Système selon l'une quelconque des revendications 1 à 3, dans lequel l'agencement de capteurs de bruit comprend un réseau de capteurs d'accélération (301 à 304, 501 à 504) adjacents.

5. Système selon l'une quelconque des revendications 1 à 4, dans lequel l'agencement de capteurs de bruit comprend des capteurs (301 à 304, 501 à 504) identiques.

6. Procédé de régulation de bruit de route comprenant la détection de bruit et de vibration, la création de signaux d'élimination pour éliminer du bruit d'une pluralité de sources de bruit et de vibration sur la base du bruit et des vibrations détectés, et la génération à partir des signaux d'élimination de bruit d'élimination, la détection de bruit et de vibration étant **caractérisée en ce qu'**elle comprend :

la génération avec un agencement de capteurs d'accélération d'au moins deux signaux de détection représentatifs d'au moins l'un d'accélérations, de mouvements et de vibrations qui agissent sur l'agencement de capteurs d'accélération, dans lequel les signaux de détection ont des plages dynamiques qui sont les rapports entre des amplitudes maximales des signaux de détection et du bruit créé par l'agencement de capteurs d'accélération ; et
le fait de faire la somme des au moins deux signaux de détection pour fournir un signal de somme, dans lequel le signal de somme inclut du bruit créé par l'agencement de capteurs d'accélération et dans lequel le signal de somme a une plage dynamique qui est le rapport entre une amplitude maximale du signal de somme et le bruit inclus dans le signal de somme, la plage dynamique du signal de somme étant supérieure à la moyenne arithmétique des plages dynamiques des signaux de détection (802), dans lequel les au moins deux signal de détection sont générés avec des capteurs d'accélération ayant des directions identiques d'une sensibilité maximale.

7. Procédé selon la revendication 6, dans lequel les au moins deux signaux de détection incluent des signaux de détection qui sont générés avec au moins deux capteurs d'accélération unidirectionnels, chacun des au moins deux capteurs d'accélération unidirectionnels étant conçu pour générer un signal de détection.

8. Procédé selon la revendication 6 ou 7, dans lequel les au moins deux signaux de détection incluent des signaux de détection qui sont générés avec au moins un capteur d'accélération multidirectionnel, l'au moins un capteur d'accélération multidirectionnel étant conçu pour générer au moins deux signaux de détection.

9. Procédé selon l'une quelconque des revendications 6 à 8, dans lequel les au moins deux signaux de détection sont générés avec un réseau de capteurs d'accélération adjacents.

10. Procédé selon l'une quelconque des revendications 6 à 9, dans lequel les au moins deux signaux de détection incluent des signaux de détection qui sont générés avec des capteurs identiques.

FIG 1

FIG 2

FIG 3

FIG 4

FIG 5

FIG 6

603

604

602

601

A

A

N

N

605

606

+

608

607

2A

609

N

FIG 7

702

707

703

708

704

709

705

710

706

701

—

+

712

711

801

GENERATING WITH AN ACCELERATION SENSOR ARRANGEMENT AT LEAST TWO SENSE
SIGNALS REPRESENTATIVE OF THE ACCELERATION THAT ACTS ON THE ACCELERATION
SENSOR ARRANGEMENT, WHEREIN THE SENSE SIGNALS HAVE DYNAMIC RANGES WHICH
ARE THE RATIOS BETWEEN MAXIMUM AMPLITUDES OF THE SENSE SIGNALS AND NOISE
CREATED BY THE ACCELERATION SENSOR ARRANGEMENT

802

SUMMING UP THE AT LEAST TWO SENSE SIGNALS TO PROVIDE A SUM SIGNAL, WHEREIN THE
SUM SIGNAL INCLUDES NOISE CREATED BY THE ACCELERATION SENSOR ARRANGEMENT
AND WHEREIN THE SUM SIGNAL HAS A DYNAMIC RANGE WHICH IS THE RATIO BETWEEN A
MAXIMUM AMPLITUDE OF THE SUM SIGNAL AND THE NOISE INCLUDED IN THE SUM SIGNAL,
THE DYNAMIC RANGE OF THE SUM SIGNAL BEING GREATER THAN THE ARITHMETIC MEAN OF
THE DYNAMIC RANGES OF THE SENSE SIGNALS

FIG 8

**EP 3 144 928 B1**

**REFERENCES CITED IN THE DESCRIPTION**

**Patent documents cited in the description**

- DE 3644858 A1
- EP 2293116 A2
- EP 0762146 A1
- GB 2455410 A
- EP 0721178 A2
- JP 2007219262 B